Europäisches Patentamt

European Patent Office

Office européen des brevets

(11) Publication number: **0 065 568**
**B1**

# EUROPEAN PATENT SPECIFICATION

(45) Date of publication of patent specification: **03.07.85**

(51) Int. Cl.⁴: **G 08 C 21/00**

(21) Application number: **82900180.9**

(22) Date of filing: **30.11.81**

(86) International application number:
**PCT/US81/01582**

(87) International publication number:
**WO 82/02107 24.06.82 Gazette 82/16**

(54) TOUCH POSITION LOCATING ARRANGEMENT.

(30) Priority: **08.12.80 US 214173**

(43) Date of publication of application:
**01.12.82 Bulletin 82/48**

(45) Publication of the grant of the patent:
**03.07.85 Bulletin 85/27**

(84) Designated Contracting States:
**DE FR**

(56) References cited:
**GB-A- 793 246**
**GB-A-1 234 443**
**GB-A-2 048 531**
**US-A-3 657 475**
**US-A-4 121 049**

**"One-Point Touch Input of Vector Information Computer Displays", Herot, COMPUTER GRAPHICS (US.), August 1978, pages 210-216**

(73) Proprietor: **Western Electric Company, Incorporated**
**222 Broadway**
**New York, NY 10038 (US)**

(72) Inventor: **DeCOSTA, J.**
**92 Buckingham Drive**
**Jackson, NJ 08527 (US)**
Inventor: **MALLOS, James Basil**
**1728 Overlook Drive**
**Silver Springs, Maryland 20903 (US)**
Inventor: **ROE, David Bjorn**
**9 Hill Road**
**Lincroft, NJ 07738 (US)**

(74) Representative: **Buckley, Christopher Simon Thirsk et al**
**Western Electric Company Limited 5 Mornington Road**
**Woodford Green Essex IG8 OTU (GB)**

Courier Press, Leamington Spa, England.

## Description

This invention relates to arrangements for determining the location of a touch on a surface, e.g. of a visual display.

In the use of interactive computers, a computer terminal having a visual display presents a plurality of alternative choices on the display. The user selects one desired alternative by simply touching the display at a location corresponding to the desired alternative. The computer terminal identifies the position of the touch and reacts accordingly.

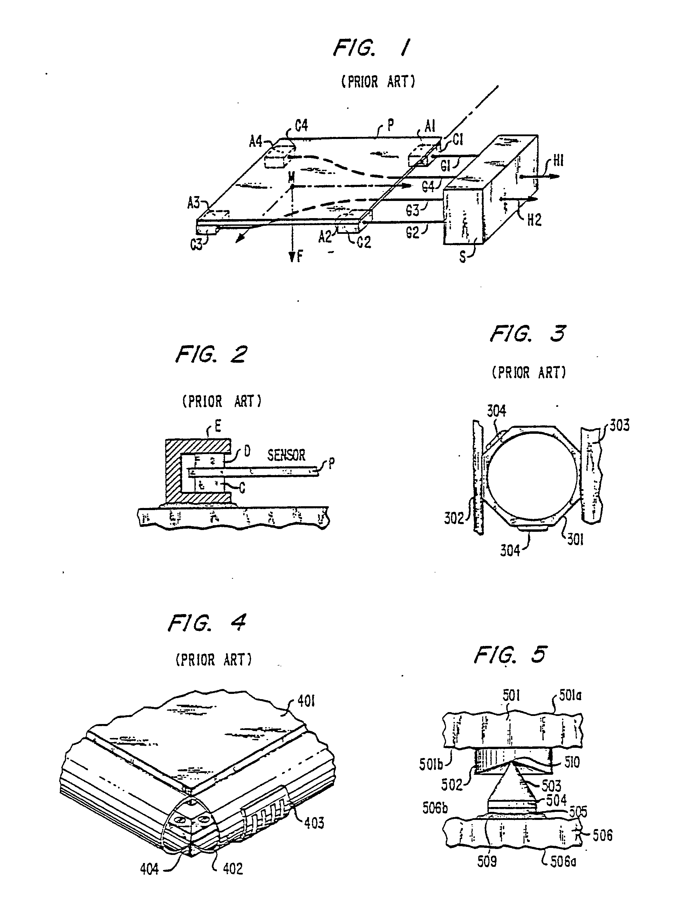

Peronneau et al., U.S. Patent 3,657,475, disclose a position indicating system comprising (FIG. 1 herein) a rigid plate, a plurality of force sensing devices, and a processing unit. The user applies a localized force F from above the exposed surface of a touch plate P, the force having a potentially non-perpendicular direction. When the localized force F is applied to the surface of the plate P, the piezoelectric sensors, $C_1$—$C_4$, provide the processing unit S with electrical signals, $G_1$—$G_4$, which are proportional to the distance of the applied force F to each sensor.

A considerable amount of error in this system arises from the arrangement for mounting the plate between a force sensing device C and a rigid block D as shown in FIG. 2. Because the planar surfaces of the force sensing devices $C_1$—$C_4$ are rigidly clamped against the surface of touch plate P by horseshoe spring E, any dimensional or clamping pressure variations from device to device tends to distort or twist the plate P thereby introducing errors into the measurements. Also, because the applied force is sensed over the entire planar area of each force sensing device, the length of the moment arm from point M to each force sensing device is not definite but runs to an undetermined point on the surface of the force sensing devices.

Another problem is that the surfaces of the force measurement devices are perpendicularly displaced from the plane of the exposed surface of the plate by a distance equal to the thickness of the plate P. Tangential (non-perpendicular) components of the force F applied against the exposed surface of plate P produce moments which tend to act on the force sensing devices $C_1$—$C_4$ causing errors in the coordinate calculations.

Herot et al., in their publication "One-Point Touch Input of Vector Information for Computer Displays," *Computer Graphics*, v. 12, n. 3, pp. 210—216, describe an arrangement, shown in FIG. 3 herein, which comprises octagonally shaped spring members 301 which are used to mount a touch surface 302 on a display surface 303. Strain gauge sensors 304 are affixed to the spring members 301 to detect the magnitude and direction of the forces sensed when the members 301 are compressed and twisted.

A problem with the Herot mounting arrangement is that visual parallax error is introduced into the system because of the spacing, determined by the diameter of the octagonal members 301, between the touch and display surfaces. A further problem is that the system is susceptible to mechanical vibration caused by the flexible octagonal support members 301.

Roeber, U.S. Patent No 4,121,049, discloses a position and force measurement system whose mounting arrangement is shown in FIG. 4. The mounting arrangement comprises two similar rectangular rigid surfaces 401 and 404 whose edges are joined by semi-circular springs 402 upon which are mounted strain gauge sensors 403. The Roeber system minimizes tangential displacement by confining the movement of the upper touch surface 401 to a perpendicular direction. However, the touch surface 401 must be displaced from the second surface 404 by the diameter of the semi-circular springs 402. Accordingly, visual parallax error can result. Also, the accuracy of the system is limited by the variability of the spring constants of the semi-circular springs 402.

According to this invention an arrangement for determining the location of a touch on a surface includes a surface to be touched, at least three spaced-apart sensing devices, and mechanical coupling means for transmitting to each sensing device a respective component of an applied touch force, the mechanical coupling means including for each sensing device a respective point of action via which the respective component of an applied touch force is transmitted to that sensing device to provide a precise location of that transmitted components with respect to that sensing device.

## Brief Description of the Drawings

FIGS. 1 to 4 illustrate prior art arrangements and have already been referred to;

FIGS. 5 and 6 show a portion of two embodiments of the present invention;

FIG. 7 shows the arrangement of FIG. 5 mounted on a rigid body;

FIGS. 8 and 9 show a portion of additional embodiments of the invention;

FIG. 10 shows the electrical connections to the arrangements of FIG. 5;

FIG. 11 is a partially exploded side view showing a touch plate mounted on a cathode ray tube;

FIG. 12 is an exploded perspective view of the apparatus of FIG. 11;

FIG. 13 is a view of a portable touch sensitive system; and

FIG. 14 shows an alternative arrangement for use with a cathode ray tube.

## Detailed Description

With reference to Fig. 5, a mounting arrangement is shown for transmitting a touching force from a touched member 501 to a force sensing device 504. The force sensing device 504 comprises a piezoelectric transducer in the form of a disc. In one embodiment, the sensing device 504 comprises a body of the piezoelectric material lead zirconate titanate which is poled in a direction perpendicular to the flat surfaces of the disc 504. Other force sensing devices which do not distort so greatly as to alter the geometry of the arrangement can be used, e.g., strain gauge sensors and variable capacitance transducers. The device 504 is mounted on a metal disc 505 secured, in turn, as by a solder joint 509, to a rigid member 506. The member 506 can comprise a display device, e.g., the face plate of a cathode ray tube.

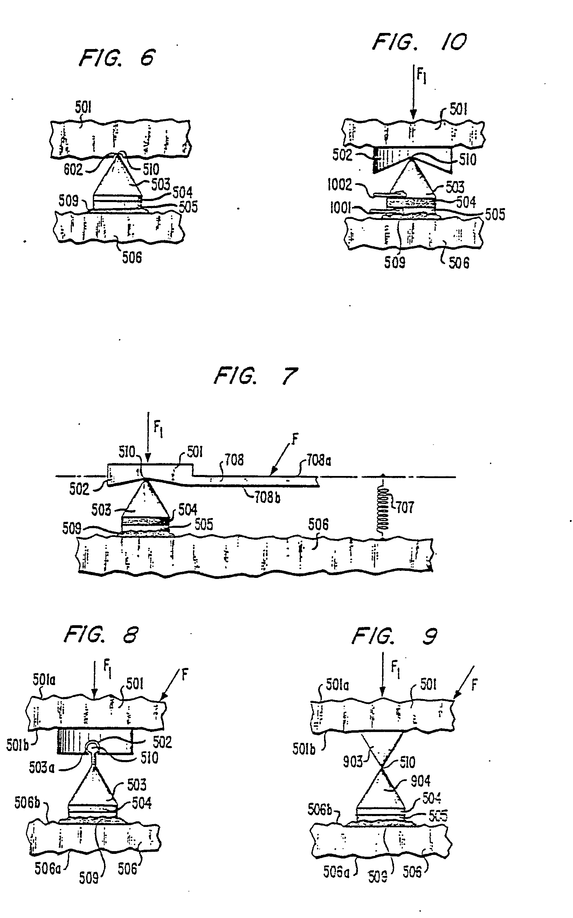

A solid, conical member 503 of, e.g., metal, is mounted with its base flush with a surface of the disc-like sensing device 504 and with its point received at the apex of a conical recess within a receiving member 502 mounted on the touched member 501. As shown in FIG. 10, electrical signals from the sensing device 504 are extracted by means of leads 1001 and 1002 soldered to metal members 503 and 505. These members are conductively bonded to the disc 504 using, for example, a conductive epoxy cement.

The point contact 501 between the two members 503 and 502 is referred to as the "point of action" because it is through this point that the touching force is transmitted to the sensing device 504. Because of the point contact, and exactly located point of reference is created for the calculation of the length of the moment arm between the point of application of the touching force and the force sensing device 504. Further, because of the point contact between the two members 501 and 506, the mounting of the one on the other gives rise to no undesirable twisting or distortion of either. This avoids the first described problem with the Peronneau et al. system.

The use of the sensor 504 mounting arrangement in a touch position locating system is described hereinafter. Also, it can be used in place of the sensor mounting arrangements of the touch position locating apparatus of the aforedescribed prior art as well as in a system described in a concurrently filed patent application entitled Touch Position Locating System, by De-Costa et al.

In the embodiment shown in FIG. 6, the receiving member 502 shown in FIG. 5 is replaced with a small recess 602 within rigid body 501. Alternatively, but not illustrated, if the sensing device 504 is mounted on the rigid member 501, e.g., between it and the receiving member 502 (FIG. 5), a pointed bump mounted directly on the surface of the body 506 can be used.

With reference to FIG. 7, there is illustrated how a touch force impinging on a touch surface is reduced to its perpendicular component at a point of action and the torque it causes eliminated. A touch plate 708 is used having an outer touch surface 708a exposed to the application of a force F which may impinge on the surface 708A at an angle. A biasing spring 707 is used to hold the receiving member 502 in engagement with pointed member 503. As shown, the touch plate is so indented as to dispose the point of action 510 in the plane of the touch surface 708a. When a tangential force F is exerted on surface 708a, no moment or torque can be exerted about point 510 because the moment arm between the tangential force and the point of action 510 has zero length. Thus, the only force sensed by the sensing device 504 corresponds to the perpendicular components of the applied force F.

Referring now to FIG. 8, the biasing spring 707 is eliminated by employing mounting apparatus comprising a ball member 503a and a socket member 502. The ball and socket joint is lubricated so as to be practically frictionless. The lubrication should provide a continuum of contact between points on the surface of the ball 503a and points on the surface of the socket 502. The point of action 510 is the center of ball member 503a.

Referring to Fig. 9, two conic members 903 and 904 are shown flexibly joined at their points. The point of action 510 of this embodiment is the point of juncture of the conic members 903 and 904. Again, no biasing spring is used.

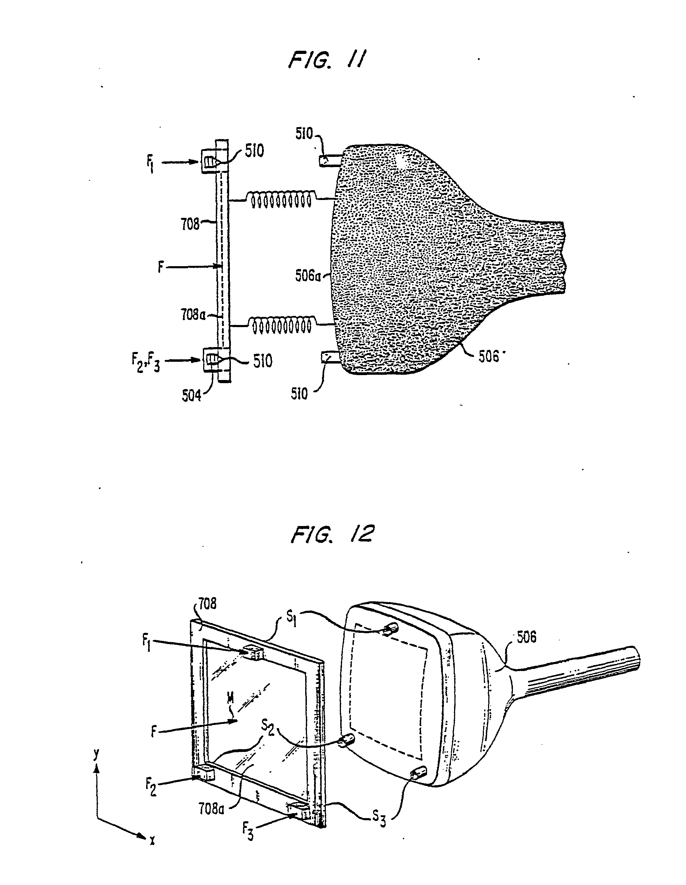

FIGS. 11 and 12 show the mounting of a touch plate 708 on the display screen of a cathode ray tube 506. In this arrangement, the force sensing member 504 is mounted on the touched body rather than, as in FIG. 5, the rigid supporting member. Some amount of visual parallax error is possible in this arrangement because of the spacing between the touch surface 708a and the viewing surface 506a.

As shown in FIG. 12, the sensor structures $S_1$, $S_2$, and $S_3$ are disposed at the corners of an isoceles triangle. Other arrangements of the sensor structures, e.g., at the four corners of a rectangular touch plate, can be used.

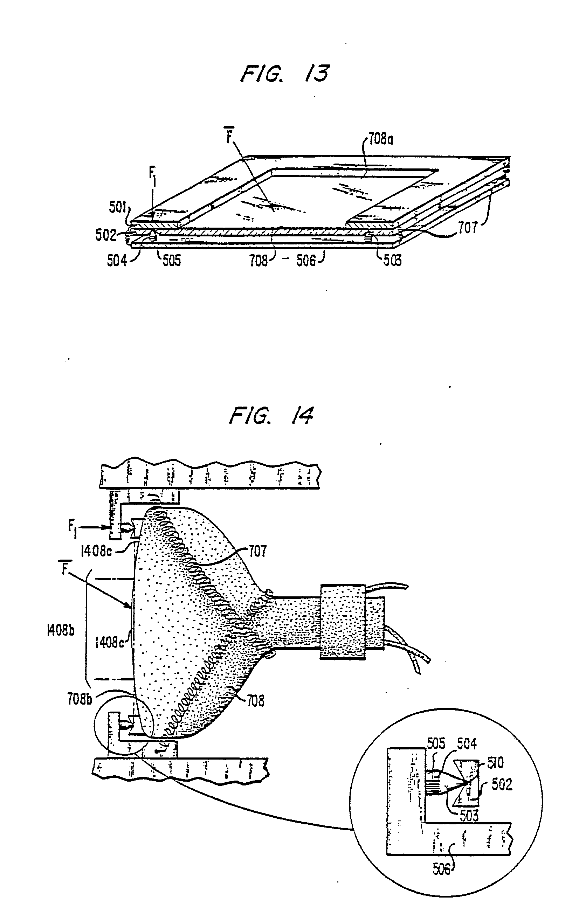

Referring to FIG. 13, a portable touch plate system is shown having rectangularly placed sensor structures. Since the touch plate surfaces 708a must remain free of visual impairment, the biasing springs 707 are mounted outside of the viewing area. Also, since the viewing surface is located adjacent to rigid body 506, rigid body 506 must be transparent.

The structure of FIG. 13 has the disadvantage that visual parallax error may result because the touch surface 708a is displaced from the viewing surface of the visual display.

Referring to Fig. 14, the visual parallax errors that are possible in the mounting arrangements depicted in FIGS. 11, 12 and 13 are eliminated. In the FIG. 14 arrangement, the face plate 708b of the cathode ray tube 708 is the touch surface.

Bias springs 707 serve to maintain contact between the sensor structures and the tube 708, the application of the touching force (F) being detected as a reduction of pressure against the force sensing detectors.

**Claims**

1. An arrangement for determining the location of a touch on a surface, including a surface (501) to be touched, at least three spaced-apart sensing devices (504), and mechanical coupling means (502, 503, 510) for transmitting to each sensing device a respective component of an applied touch force, characterised in that the mechanical coupling means includes for each sensing device a respective point of action (510) via which the respective component of an applied touch force is transmitted to that sensing device to provide a precise location of that transmitted component with respect to that sensing device.

2. An arrangement as claimed in claim 1 wherein the point of action of each mechanical coupling means is provided by the point (510) of a pointed element (503).

3. An arrangement as claimed in claim 1 wherein the point of action (510) of each mechanical coupling means is at the centre of a ball-shaped element (503a), there being a socket element (502) for receiving the ball-shaped element.

4. An arrangement as claimed in claim 1 wherein the point of action (510) of each mechanical coupling means is at the point of juncture (510) of two cone-shaped elements (903, 904) joined at their points so as to form a flexible hinge.

5. An arrangement as claimed in any one of claims 1 to 4, wherein the surface (501) to be touched is substantially planar, and each point of action is in substantially the same plane as the surface.

6. An arrangement as claimed in any one of claims 1 to 5 wherein the surface to be touched is the image-bearing surface (708b) of a visual display.

**Patentansprüche**

1. Anordnung zur Bestimmung des Ortes der Berührung einer Fläche mit einer zu berührenden Fläche (501), wenigstens drei im Abstand angeordneten Sensoren (504) und mechanischen Koppeleinrichtungen (502, 503, 510) zur Übertragung einer entsprechenden Komponente einer ausgeübten Berührungskraft an jeden Sensor, dadurch gekennzeichnet, daß die mechanische Koppeleinrichtung für jeden Sensor einen zugeordneten Wirkungspunkt (510) enthält, über den die jeweilige Komponente einer ausgübten Berührungskraft auf den Sensor übertragen wird, um eine genaue Lage der übertragenen Komponente mit Bezug auf den jeweiligen Sensor zu liefern.

2. Anordnung nach Anspruch 1, bei der der Wirkungspunkt jeder mechanischen Koppeleinrichtung durch die Spitze (510) eines gespitzten Bauteils (503) geliefert wird.

3. Anordnung nach Anspruch 1, bei der der Wirkungspunkt (510) jeder mechanischen Koppeleinrichtung im Mittelpunkt eines kugelförmigen Bauteils (503a) liegt und ein Sockelbauteil (502) zur Aufnahme des kugelförmigen Bauteils vorgesehen ist.

4. Anordnung nach Anspruch 1, bei der der Wirkungspunkt (510) jeder mechanischen Koppeleinrichtung die Verbindungsstelle (510) von zwei kegelförmigen Bauteilen (903, 904) ist, die an ihren Spitzen verbunden sind, um ein flexibles Gelenk zu bilden.

5. Anordnung nach einem der Anspruch 1 bis 4, bei der die zu berührende Fläche im wesentlichen eben ist und jeder Wirkungspunkt im wesentlichen in der gleichen Ebene wie die Fläche liegt.

6. Anordnung nach einem der Ansprüche 1 bis 5, bei der die zu berührende Fläche die Bildfläche (708b) einer Sichtanzeige ist.

**Revendications**

1. Un dispositif destiné à déterminer la position à laquelle on touche une surface, comprenant une surface (501) à toucher, au moins trois dispositifs de détection mutuellement distants (504), et des moyens de couplage mécaniques (502, 503, 510) destinés à transmettre à chaque dispositif de détection une composante respective d'une force de toucher appliquée, caractérisé en ce que les moyens de couplage mécaniques comprennent, pour chaque dispositif de détection, un point d'action respectif (510) par l'intermédiaire duquel la composante respective d'une force de toucher appliquée est transmise à ce dispositif de détection, afin de définir une position précise de cette composante transmise, par rapport à ce dispositif de détection.

2. Un dispositif selon la revendication 1, dans lequel le point d'action de chacun des moyens de couplage mécaniques est formé par la pointe (510) d'un élément pointu (503).

3. Un dispositif selon la revendication 1, dans lequel le point d'action (510) de chacun des moyens de couplage mécaniques est au centre d'un élément en forme de rotule (503a), et il existe un réceptacle (502) destiné à recevoir l'élément en forme de rotule.

4. Un dispositif selon la revendication 1, dans lequel le point d'action (510) de chacun des moyens de couplage mécaniques est au point de jonction (510) de deux éléments en forme de cônes (903, 904), réunis à leurs sommets de façon à former une articulation flexible.

5. Un dispositif selon l'une quelconque des revendications 1 à 4, dans lequel la surface (510) à toucher est pratiquement plane, et chaque point d'action est pratiquement dans le même plan que la surface.

6. Un dispositif selon l'une quelconque des revendications 1 à 5, dans lequel la surface à toucher est la surface de présentation d'image (708b) d'un visuel.

*FIG. 1*

(PRIOR ART)

*FIG. 2*

(PRIOR ART)

*FIG. 3*

(PRIOR ART)

*FIG. 4*

(PRIOR ART)

*FIG. 5*

*FIG. 6*

*FIG. 10*

*FIG. 7*

*FIG. 8*

*FIG. 9*

## FIG. 11

$F_1$
510
510
708
F
506a
708a
$F_2, F_3$
510
504
510
506
510

## FIG. 12

708
$S_1$
506
$F_1$
M
F
$S_2$
$F_2$
708a
$S_3$
$F_3$
y
x

FIG. 13

FIG. 14